# EUROPÄISCHE PATENTSCHRIFT

(11) **EP 1 350 811 B1**
(45) Veröffentlichungstag und Bekanntmachung des Hinweises auf die Patenterteilung: **15.10.2008**
(21) Anmeldenummer: 03450080.1
(22) Anmeldetag: 03.04.2003
(51) Int. Cl.: C08L 23/16, B29C 47/00, F16L 9/12

(54) **Verfahren zum Herstellen eines hohlen Formlings, insbesondere für eine Wasserleitungsinstallation**
Process for manufacturing a hollow object, especially for a water conduit
Procédé pour la fabrication d'un objet creux, spécialement pour une conduite d'eau

(30) Priorität: 05.04.2002 AT 5362002
(43) Veröffentlichungstag der Anmeldung: 08.10.2003
(73) Patentinhaber: KE-KELIT Kunststoffwerk Gesellschaft m.b.H., A-4017 Linz (AT)
(72) Erfinder: Rametsteiner, Karl, 4040 Linz (AT)
(74) Vertreter: Hübscher, Helmut

(56) Entgegenhaltungen:
- WO-A-01/92406
- DE-U- 29 722 949
- DATABASE WPI Section Ch, Week 199332 Derwent Publications Ltd., London, GB; Class A17, AN 1993-252851 XP002247027 & JP 05 170932 A (MITSUBISHI PETROCHEMICAL CO LTD), 9. Juli 1993 (1993-07-09)

## Beschreibung

Die Erfindung bezieht sich auf ein Verfahren zum Herstellen eines hohlen Formlings, insbesondere für eine Wasserleitungsinstallation, aus einer Schmelze auf Basis eines extrudierten, statistischen Copolymers aus Propylen und Äthylen.

Wasserleitungsrohre aus Propylen/Äthylen Copolymeren sind aus den Druckschriften WO-A-0 192 406, DE-U-29 722 949 und JP-A-5 170 932 bekannt.

Die guten Eigenschaften von Polypropylen hinsichtlich der Widerstandsfähigkeit gegen Chemikalien, der Temperaturbeständigkeit, der physiologischen Unbedenklichkeit und der geringen Alterung machen diesen Werkstoff für Rohrleitungen besonders geeignet, zumal auch gute Festigkeitswerte erreicht werden können. Trotzdem bleibt das Einsatzgebiet von Rohrleitungen aus Polypropylen beschränkt, weil das hiefür vor allem verwendete homopolymere Polypropylen eine geringe Schlagfestigkeit in der Kälte aufweist, so daß solche Rohrleitungen nur bei Betriebstemperaturen über 5°C eingesetzt werden können. Um eine bessere Kälteschlagfestigkeit zu erhalten, werden Rohre aus einem homopolymeren Polypropylen extrudiert, das aufgrund entsprechender Nukleierungsmittel nicht in einer üblichen monoklinen α-Form, sondern in einer hexonalen β-Form kristallisiert. Durch den Einsatz von Polypropylen mit einer β-Kristallisationsform konnte zwar die Kälteschlagfestigkeit der extrudierten Rohre erheblich verbessert werden, doch mußte mit den verbesserten Eigenschaften bei tieferen Temperaturen ein Absinken der Alterungsbeständigkeit bei höheren Temperaturen in Kauf genommen werden.

Mit Rohren, die aus einem statistischen Copolymer aus Propylen und Äthylen extrudiert werden, kann die Kälteschlagfestigkeit bei einer hervorragenden Alterungsbeständigkeit in der Wärme verbessert werden. Unterhalb von -3°C ist jedoch die Rißbildungsgefahr bei einer Schlagbeanspruchung unzureichend. Solche Rohre aus einem statistischen Copolymer aus Propylen und Äthylen mit einem Äthylengehalt von 7 bis 8 Gew.% werden daher bevorzugt für Wasserinstallationen in Gebäuden verwendet in denen das Absinken der Rohrtemperatur unter -3°C nicht zu befürchten ist.

Schließlich gelingt es, durch eine Blockpolymerisation von Propylen und Äthylen ein Polyolefin zu erzeugen, das eine ausreichende Kälteschlagfestigkeit bis -30°C aufweist, allerdings auf Kosten der Beständigkeit gegenüber heißen Medien im Langzeitverhalten. Dies bedeutet, daß aus einem Polypropylen-Blockpolymer hergestellte Rohre nur für vergleichsweise niedrige Medientemperaturen verwendet werden können, so daß sich das Einsatzgebiet auf die Abwasserführung, die Kaltwasserleitung und auf Niedertemperaturheizungen beschränkt.

Der Erfindung liegt somit die Aufgabe zugrunde, ein Verfahren zum Herstellen eines hohlen Formlings, insbesondere für eine Wasserleitungsinstallation, der eingangs geschilderten Art so auszugestalten, daß eine ausreichende Kälteschlagfestigkeit auch bei tieferen Temperaturen sichergestellt werden kann, ohne Einbußen bezüglich der guten Alterungsbeständigkeit bei hohen Temperaturen in Kauf nehmen zu müssen.

Die Erfindung löst die gestellte Aufgabe dadurch, daß einerseits 75 bis 98 Gew.% des statistischen Copolymers mit einem Äthylengehalt von 6 bis 10 Gew.% und anderseits 25 bis 2 Gew.% eines Blockpolymers aus Propylen und Äthylen mit einem Äthylengehalt von höchstens 10 Gew.% des Blockpolymers homogen vermischt und extrudiert werden, wobei das Blockpolymer einen E-Modul von mindestens 1200 MPa und einen Schmelzflußindex MFI (190°C/5 kg) kleiner als 1g/10min aufweist.

Es muß als überraschend angesehen werden, daß der Zusatz von Blockpolymeren, deren E-Modul aufgrund einer durch geeignete Nukleierungsmittel bedingten Steigerung der Kristallisationsrate auf zumindest 1200 MPa angehoben wurde, zu einem statistischen Copolymer mit einem E-Modul in der Größenordnung von 900 MPa zu einem Polyolefingemisch führt, das in der Kälte erheblich verbesserte Schlagfestigkeiten aufweist. Voraussetzung hierfür ist allerdings, daß das zum Einsatz kommende Blockpolymer einen Schmelzflußindex MFI (190°C/5kg) <1g/10min, gemessen gemäß ISO 1133, aufweist. Sinkt der Anteil des Blockpolymers an der Gesamtmischung unter 2 Gew.%, so kann keine ins Gewicht fallende Verbesserung der Kälteschlagfestigkeit des statistischen Copolymers aus Propylen und Äthylen mehr erreicht werden. Übersteigt der Gewichtsanteil des Blockpolymers 25 %, so stellt sich eine meßbare Verschlechterung der Alterungsbeständigkeit ein. Bei einem Gewichtsanteil von 8 bis 15 % des Blockpolymers ergeben sich vorteilhafte Verhältnisse sowohl hinsichtlich der Kälteschlagfestigkeit als auch der Alterungsbeständigkeit. Es können ohne weiteres ausreichende Kälteschlagfestigkeiten in einem Temperaturbereich zwischen -10°C bis -15°C sichergestellt werden.

Soll die Alterungsbeständigkeit des extrudierten Polyolefingemisches zusätzlich gesteigert werden, so können Antioxidantien auf der Basis von Phosphiten, sterisch gehinderten Phenolen und/oder Thiodiestern dem Gemisch beigemengt werden.

Die besonderen Eigenschaften von Formlingen, die aus einer erfindungsgemäßen Polyolefinmischung hergestellt werden, wird anhand der nachfolgenden Beispiele verdeutlicht:

### Beispiel 1:

100 Gewichtsteile eines unter dem Namen DAPLEN RA 130E der Firma Borialis A/S (DK) im Handel erhältlichen statistischen Copolymers aus Propylen und Äthylen wurden mit 8 Gewichtsteilen eines unter dem Namen Stamylan P71EK71PS der Firma DSM Polypropylenes B.V. (NL) im Handel erhältlichen Polypropylen-Blockpolymers mit einem E-Modul von 1600MPa und einem Schmelzflußindex (190°C/5kg) von 0,6g/10min vermengt und extrudiert. Es wurde ein Einschneckenextruder mit einem Längen-Durchmesserverhältnis von 28:1 eingesetzt. Die Temperatur der Schmelze betrug 200 bis 240°C. Zur Erzielung einer guten Homogenität wurde die Schmelze vor dem Strangpressen eines Rohres zusätzlich durch eine Schmelzpumpe gefördert. Das Rohr wurde in herkömmlicherweise kalibriert, gekühlt und abgelängt. Der Durchmesser der Rohre betrug 20 mm bei einer Wanddicke von 3,4 mm, was der Druckstufe PN20 bei 20°C gemäß Ö-Norm B5174 entspricht. Nach einer Lagerung der Rohrproben bei Raumtemperatur über 24 Stunden wurden die Probenrohre mit Vergleichsrohren aus dem gleichen statistischen Copolymer jedoch ohne Zusatz eines Blockpolymers hinsichtlich des Schmelzflußindexes, der Bruchrate bei -10°C des E-Moduls und der Zeitstandfestigkeit bei einer Belastung von 95°C und 3,5 MPa untersucht. Die Untersuchungsergebnisse sind in der nachfolgenden Tabelle zusammengefaßt, in der diese Untersuchungsergebnisse auch mit den durch die Ö-Norm B5174 vorgegebenen Normwerten verglichen werden.

| | erfindungsgemäße Rohrproben | Vergleichsrohrproben | Ö-Norm B5174 |
|---|---|---|---|
| MFI (190°C/5kg) | 0,65g/10min | 0,52g/10min | < 1g/10min |
| E-Modul | 830Mpa | 820Mpa | 800-900MPa |
| Bruchrate (-10°C) | 0% | 95% | |
| Zeitstandsfestigkeit (95°C; 3,5Mpa) | 3280h | 3400h | > 1000h |

### Beispiel 2:

Es wurden 100 Gewichtsteile eines unter dem Namen Vestolen P9421 der Firma DSM Polypropylenes B.V. im Handel erhältlichen statistischen Copolymers aus Propylen und Äthylen mit 15 Teilen eines unter dem Namen Daplen BA 212E der Firma Borialis A/S im Handel befindlichen Blockpolymers mit einem E-Modul von 1600 MPa und einem Schmelzflußindex von 0,3g/10min unter den Bedingungen des Beispiels 1 gemischt und extrudiert, um entsprechende Rohre herzustellen.

Die untersuchten Vergleichswerte sind wieder in der nachstehenden Tabelle zusammengefaßt.

| | erfindungsgemäße Rohrproben | Vergleichsrohrproben | Ö-Norm B5174 |
|---|---|---|---|
| MFI (190°C/5kg) | 0,63g/10min | 0,52g/10min | < 1g/10min |
| E-Modul | 840MPa | 820MPa | 800-900MPa |
| Bruchrate (-12°C) | 0% | 100% | |
| Zeitstandsfestigkeit (95°C; 3,5Mpa) | 3100h | 3400h | > 1000h |

Aus den Tabellenwerten der Beispiele 1 und 2 ergibt sich anschaulich, daß die Bruchraten bei -10°C bzw. bei -12°C durch das erfindungsgemäße Polyolefingemisch entscheidend verbessert werden konnten, ohne die Wärmebeständigkeit wesentlich zu verringern.

## Patentansprüche

1. Verfahren zum Herstellen eines hohlen Formlings, insbesondere für eine Wasserleitungsinstallation, aus einer Schmelze auf Basis eines extrudierten, statistischen Copolymers aus Propylen und Äthylen, **dadurch gekennzeichnet, daß** einerseits 75 bis 98 Gew.% des statistischen Copolymers mit einem Äthylengehalt von 6 bis 10 Gew.% und anderseits 25 bis 2 Gew.% eines Blockpolymers aus Propylen und Äthylen mit einem Äthylengehalt von höchstens 10 Gew.% des Blockpolymers homogen vermischt und extrudiert werden, wobei das Blockpolymer einen E-Modul von mindestens 1200 MPa und einen Schmelzflußindex MFI, gemessen bei 190°C mit 5kg , kleiner als 1g/10min aufweist.

2. Verfahren nach Anspruch 1, **dadurch gekennzeichnet, daß** 85 bis 92 Gew.% des statistischen Copolymers mit 15 bis 8 Gew.% des Blockpolymers vermischt werden.

3. Verfahren nach Anspruch 1 oder 2, **dadurch gekennzeichnet, daß** dem Gemisch Antioxidantien auf der Basis von Phosphiten, sterisch gehinderten Phenolen und/oder Thiodiestern zugemischt werden.

## Claims

1. Method of producing a hollow moulded article, in particular for a water conduit installation, from a melt based upon an extruded statistical copolymer consisting of propylene and ethylene, **characterised in that** on the one hand 75 to 98 wt.% of the statistical copolymer with an ethylene content of 6 to 10 wt.% and on the other hand 25 to 2 wt.% of a block polymer consisting of propylene and ethylene with a maximum ethylene content of 10 wt.% of the block polymer are homogeneously mixed and extruded, wherein the block polymer has a modulus of elasticity of at least 1200 MPa and a melt flow index MFI of less than 1g/10 min, as measured at 190°C with 5 kg.

2. Method as claimed in claim 1, **characterised in that** 85 to 92 wt.% of the statistical copolymer is mixed with 15 to 8 wt.% of the block polymer.

3. Method as claimed in claim 1 or 2, **characterised in that** antioxidants based upon phosphites, sterically inhibited phenols and/or thiodiesters are added to the mixture.

## Revendications

1. Procédé pour la fabrication d'une ébauche creuse, en particulier pour une installation de conduite d'eau, à partir d'une masse fondue à base d'un copolymère statistique extrudé composé de propylène et d'éthylène, **caractérisé en ce que**, d'une part, de 75 % à 98 % du copolymère statistique ayant une teneur en éthylène de 6 à 10 % et, d'autre part, de 25 à 2 % en poids d'un polymère à blocs formé de propylène et d'éthylène, avec une teneur en éthylène maximale du polymère à blocs de 10 % en poids, sont mélangés de façon homogène et extrudés, le polymère à blocs présentant un module E d'au moins 1200 MPa et un indice de fusion complète MFI, mesuré à 190°C avec 5 kg, inférieur à 1 g/10 min.

2. Procédé selon la revendication 1, **caractérisé en ce que** de 85 à 92 % en poids du copolymère statistique sont mélangés à 15 à 8 % en poids du copolymère à blocs.

3. Procédé selon la revendication 1 ou 2, **caractérisé en ce que** l'on ajoute au mélange des antioxydants à base de phosphites, de phénols et/ou de thiodiesters bloqués stériquement.
